# NEUE EUROPÄISCHE PATENTSCHRIFT

(11) **EP 2 387 869 B2**
(45) Veröffentlichungstag und Bekanntmachung des Hinweises auf die Entscheidung über den Einspruch: **04.08.2021**
(45) Hinweis auf die Patenterteilung: 26.09.2018
(21) Anmeldenummer: 11155531.4
(22) Anmeldetag: 23.02.2011
(51) Int. Cl.: A01D 41/12, F01N 13/18

(54) **LANDWIRTSCHAFTLICHE MASCHINE MIT BELÜFTETEM ABGASSTRANG**
AGRICULTURAL MACHINE WITH VENTILATED EXHAUST GAS FLOW
MACHINE AGRICOLE DOTÉE D'UN SYSTÈME D'ÉCHAPPEMENT AÉRÉ

(30) Priorität: 20.05.2010 DE 102010021090
(43) Veröffentlichungstag der Anmeldung: 23.11.2011
(73) Patentinhaber: CLAAS Selbstfahrende Erntemaschinen GmbH, 33428 Harsewinkel (DE)
(72) Erfinder: Waten, Björn, 48231 Warendorf (DE); Rottmann, Fabian, 33824 Werther (DE); Krieft, Manfred, 33428 Harsewinkel (DE); Teggemann, Thomas, 59320 Ennigerloh (DE)
(74) Vertreter: CLAAS Gruppe

(56) Entgegenhaltungen:
- EP-A1- 1 744 027
- DD-A1- 97 921
- DE-A1- 2 240 681
- DE-A1- 2 550 497
- DE-A1- 4 136 304
- DE-A1- 10 206 066
- DE-U1- 20 318 332
- US-A- 3 820 327
- US-A- 4 891 940
- US-A1- 2007 193 251

## Beschreibung

Die vorliegende Erfindung betrifft eine landwirtschaftliche Maschine, insbesondere eine fahrbare Erntemaschine.

Beim Feldeinsatz derartiger Maschinen werden in großen Mengen Staub und feine Pflanzenpartikel freigesetzt, die sich zum Teil an der Maschine ablagern. Wenn Pflanzen in trockenem Zustand geerntet werden, wie etwa ausgereiftes Getreide, Soja etc., dann sind diese Pflanzenpartikel bereits zur Zeit ihrer Ablagerung leicht entzündbar. Beim Ernten von feuchtem Gut, wie etwa Futtermais, ist die Freisetzung von Partikeln geringer, und die erzeugten Partikel sind aufgrund ihres Wassergehalts nicht ohne weiteres entzündbar, doch wenn sie sich auf heißen Oberflächen der Maschine absetzen, trocknen sie dort nach gewisser Zeit und bilden eine entzündbare Schicht.

Wenn eine solche Schicht in Brand gerät, führt dies zu schweren Schäden an der Maschine, bis hin zur vollständigen Zerstörung. Unter ungünstigen Umständen kann sich der Brand auch auf einen abzuerntenden Pflanzenbestand ausbreiten. Ein Benutzer ist daher gehalten, bei der Wartung der Maschine darauf zu achten, ob sich eine solche Schicht bildet, und sie ggf. zu beseitigen.

Um die Brandgefahr zu verringern, wurde bereits erwogen, besonders heiße Oberflächen, insbesondere in einem Abgastrakt der Maschine, mit einer isolierenden Ummantelung zu versehen. Zwar sind an der frei liegenden Oberfläche einer solchen Ummantelung ohne weiteres Temperaturen erreichbar, die mit ausreichender Sicherheit unterhalb der Entzündungstemperatur der sich ablagernden Partikel liegen; der dadurch hervorgerufene Wärmestau kann jedoch zu einer noch stärkeren Erhitzung der ummantelten Bereiche führen, so dass Maschinenteile, Schmieröl etc. überhitzen und dabei Schaden nehmen können. Darüber hinaus ist die Möglichkeit nicht auszuschließen, dass die Wärme, die über die über die ummantelten Bereiche der Maschine nicht abfließen kann, eine kritische Erhitzung an anderen Oberflächen der Maschine bewirkt.

Aus DE 41 36 304 A1 ist eine Brennkraftmaschine bekannt, die zum Zwecke der Schalldämmung gekapselt ist. Derartige gekapselte Brennkraftmaschinen werden bei Omnibussen eingesetzt, um die Betriebsgeräusche zu reduzieren. Das Abgasrohr der Brennkraftmaschine muss durch die Kapsel hindurchtreten. Um eine Überhitzung der Kapsel durch das heiße Abgasrohr am Ort des Durchtritts zu vermeiden, ist um das Abgasrohr herum ein Schutzrohr angeordnet und an der Wand der Kapsel befestigt. In dem Schutzrohr zirkulierende Kühlluft kann zwar eine Überhitzung des Schutzrohrs und der angrenzenden Kapselwand verhindern, für den Einsatz in Landmaschinen ist diese Lösung jedoch nicht geeignet, denn im Gegensatz zu einer berührend montierten Ummantelung verhindert das Schutzrohr nicht, dass brennbare Partikel in Kontakt mit dem Abgasrohr gelangen und sich dort entzünden.

Aufgabe der vorliegenden Erfindung ist daher, eine landwirtschaftliche Maschine mit einem verbesserten Brandschutz zu schaffen.

Die Aufgabe wird gelöst, indem bei einer landwirtschaftlichen Maschine mit einem Verbrennungsmotor, einer von dem Verbrennungsmotor ausgehenden Abgasleitung und einer Schutzhülle, die wenigstens einen Teil der Abgasleitung unter Ausbildung eines Zwischenraums überdeckt, der Zwischenraum mit Überdruck beaufschlagt ist. Indem dieser Überdruck sich über alle Öffnungen des Zwischenraums ins Freie abfließt, ist das Eindringen von Staub in den Zwischenraum über diese Öffnungen ausgeschlossen. Die von der Schutzhülle überdeckte Oberfläche der Abgasleitung bleibt daher staubfrei, so dass ein Brand ausgeschlossen ist.

Als überdeckte Teile der Abgasleitung kommen insbesondere sich im Betrieb stark erhitzende Komponenten wie etwa ein Abgassammelkrümmer und/oder wenigstens eine Turbine eines Turboladers in Betracht.

Um Staub von dem Zwischenraum fernzuhalten, ist vorzugsweise einer Quelle für den Überdruck ein Staubfilter zugeordnet.

Als Quelle für den Überdruck ist ein - direkt oder indirekt über den Verbrennungsmotor angetriebenes - Gebläse vorgesehen.

Der Staubfilter ist vorzugsweise ansaugseitig vom Gebläse angeordnet, um Staub und Partikel auch vom Gebläse selbst fern zu halten.

Eine Auslassöffnung des Zwischenraums ist vorzugsweise als Engpass ausgebildet, um in Höhe der Auslassöffnung die Strömungsgeschwindigkeit der austretenden Luft zu erhöhen und somit das Eindringen von Partikeln auch dann zuverlässig zu verhindern, wenn der Überdruck in dem Zwischenraum nur gering ist.

Eine Auslassöffnung des Zwischenraums kann in der Schutzhülle selbst gebildet sein. Alternativ oder zusätzlich kann eine Auslassöffnung des Zwischenraums durch einen Spalt zwischen einem Rand der Schutzhülle und einem zu diesem Rand benachbarten Teil der Maschine gebildet sein. Eine solche Auslassöffnung kann insbesondere ein aus Fertigungstoleranzen der Schutzhülle resultierender Spalt sein.

Die Flussrichtung der Luft in dem Zwischenraum ist vorzugsweise entgegengesetzt zu der des Abgases in der Abgasleitung. So kann die Temperaturdifferenz zwischen dem Abgas und der Luft des Zwischenraums über dessen gesamte Länge hinweg konstanter gehalten werden als im Falle gleicher Strömungsrichtungen, was die Effektivität der Wärmeabfuhr verbessert.

Der Luftdurchsatz in dem Zwischenraum ist zweckmäßigerweise bemessen, um die Temperatur der den Zwischenraum begrenzenden Oberflächen unter der Zündtemperatur von Staub- und Schmutzpartikeln zu halten.

Zu diesem Zweck sollte der Luftdurchsatz proportional zur abzuführenden Wärmeleistung und demnach auch proportional zur Nennleistung des Verbrennungsmotors sein. Ein Verhältnis zwischen Luftdurchsatz und Nennleistung von 1 bis 20 l min⁻¹kW⁻¹, insbesondere 2 bis 10 l min⁻¹kW⁻¹, hat sich als geeignet erwiesen.

In der Abgasleitung kann eine Turbine eines Turboladers zum Vorverdichten der Verbrennungsluft des Verbrennungsmotors angeordnet sein. Der heißeste Teil einer solchen Abgasleitung ist dann der Teil, der sich von einem Abgasauslassventil der Brennkraftmaschine bis zur Turbine erstreckt. Vorzugsweise ist daher wenigstens dieser Teil der Abgasleitung vollständig von der Schutzhülle überdeckt.

Weitere Merkmale und Vorteile der Erfindung ergeben sich aus der nachfolgenden Beschreibung von Ausführungsbeispielen unter Bezugnahme auf die beigefügten Figuren. Es zeigen:
- Fig. 1: eine schematische Darstellung eines Mähdreschers als Beispiel für eine erfindungsgemäße landwirtschaftliche Maschine;
- Fig. 2: eine schematische Darstellung des Verbrennungsmotors und des Luftversorgungs- und Abgasableitungssystems des Mähdreschers aus Fig. 1; und
- Fig. 3: einen schematischen Schnitt durch einen Abgaskrümmer und eine ihn umgebende Schutzhülle des Motors aus Fig. 2.

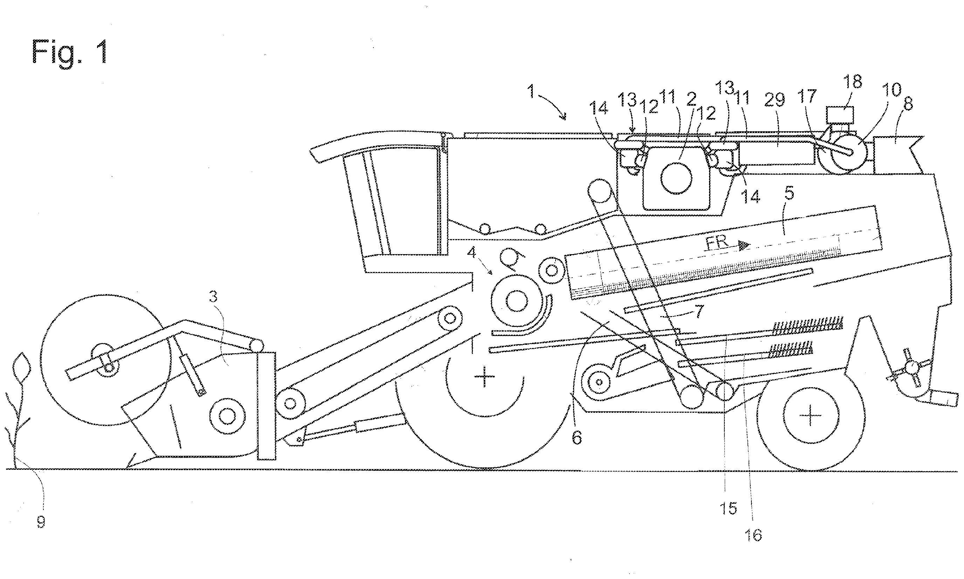

Die Funktionsweise des in Fig. 1 gezeigten Mähdreschers ist dem Fachmann an sich bekannt und braucht nicht ausführlich beschrieben zu werden. Ein Dieselmotor 2, der in einem oberen mittigen Bereich der Karosserie des Mähdreschers untergebracht ist, treibt direkt oder indirekt dessen diverse Baugruppen an, wie etwa ein Schneidwerk 3 zum Schneiden von Erntegut 9, Dreschorgane 4, einen Axialrotor 5, Siebe 15, 16, denen der von den Dreschorganen 4 und dem Axialrotor 5 abgeschiedene Kornanteil des Ernteguts zugeführt wird, einen Überkehrelevator 6 und einen Korntankelevator 7. Der Dieselmotor 2 wird mit Verbrennungsluft über einen Grobreiniger 8 und einen Verbrennungsluftfilter 10 versorgt. Der Grobreiniger 8 befreit angesaugte Außenluft von groben Partikeln, indem die Luft in seinem Inneren mehrfach abrupt umgelenkt wird, wobei die Partikel, die aufgrund ihrer höheren Trägheit den Umlenkungen nicht ohne weiters folgen können, an Prallflächen des Grobreinigers 8 abgeschieden werden. Die solcherart vorgereinigte Luft durchläuft eine Membran des Verbrennungsluftfilters 10, bevor sie über einen Ansaugkrümmer 11 und ein Paar von Turboladern 13 auf die in zwei Reihen angeordneten Zylinder des Motors 2 verteilt wird.

Von den Zylindern ausgestoßenes Abgas gelangt über in Fig. 1 unter Schutzhüllen 12 verborgene Abgaskrümmer zu Turbinen 14 der Turbolader 13, um diese anzutreiben.

Ein Gebläse 17, das die Schutzhüllen 12 mit Kühlluft versorgt, kann, wie in Fig. 1 dargestellt, Frischluft über einen eigenen Filter 18 aus der Umgebung ansaugen.

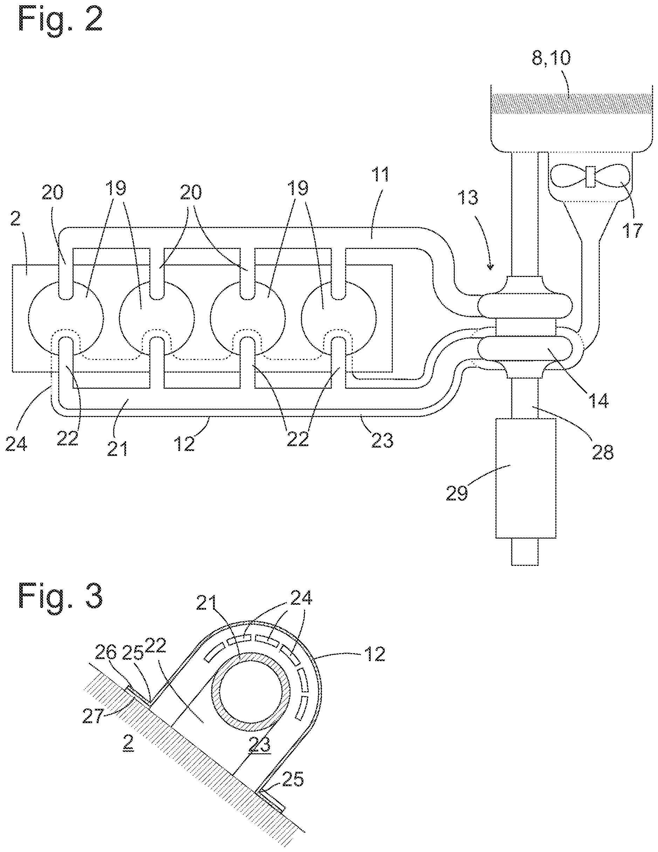

Fig. 2 zeigt eine schematische Darstellung des Motors 2 und eine ihm zugeordneten Frischluftversorgungs- und Abgasableitsystems gemäß einer gegenüber Fig. 1 geringfügig abgewandelten Ausgestaltung. Die Abwandlung unterscheidet sich von der Ausgestaltung der Fig. 1 lediglich dadurch, dass das Gebläse 17 Frischluft über denselben Grobreiniger 8 und Verbrennungsluftfilter 10 ansaugt wie die Zylinder des Motors 2. Fig. 2 zeigt der Einfachheit halber nur eine Reihe von Zylindern 19 des Motors 2 in einer schematischen Draufsicht. Zweige 20 des Ansaugkrümmers 11 erstrecken sich zu jedem einzelnen Zylinder 19. Entsprechend weist der Abgaskrümmer 21 von jedem einzelnen Zylinder 19 ausgehende Zweige 22 auf. Die Schutzhülle 12 überdeckt den Abgaskrümmer 21 zwischen Motor 2 und Turbine 14 vollständig und bildet eine Schale rings um die Turbine 14.

Wie aus dem Querschnitt der Fig. 3 deutlich wird, ist die Schutzhülle 12 in der Umgebung der Zylinder 19 rinnen- oder halbzylinderförmig, und eine offene Seite der Schutzhülle 12 ist am Motorblock 2 befestigt, so dass dieser und die Schutzhülle 12 gemeinsam einen Zwischenraum 23 rings um den Abgaskrümmer 21 begrenzen. So sind Oberflächenbereiche des Motorblocks 2 in unmittelbarer Umgebung von Auslassventilen der Zylinder 19, die im Betrieb eine hohe Temperatur erreichen können, von der Wirkung der Schutzhülle 12 erfasst.

In der Darstellung der Fig. 2 umspült ein vom Gebläse 17 angetriebener Luftstrom zunächst die Turbine 14, bevor er den weiter stromabwärts gelegenen Zwischenraum 23 zwischen Schutzhülle 12 und Motor 2 erreicht und schließlich über Auslassöffnungen 24 ins Freie tritt. Die Auslassöffnungen 24 können, wie in Fig. 2 dargestellt, an einem der Turbine 14 gegenüber liegenden Ende der Schutzhülle 12 angeordnet sein, so dass die Luft die Schutzhülle 12 auf ihrer gesamten Länge durchlaufen muss, bevor sie wieder ins Freie tritt. Denkbar ist aber auch, benachbart zu dem Motor 2 zugewandten Längskanten 25 der Schutzhülle 12 Auslassöffnungen vorzusehen, zum Beispiel in Form von einerseits vom Motorblock 2, andererseits von abgewinkelten Randstegen 26 der Schutzhülle 12 begrenzten Spalten 27, um einen über die Oberfläche des Motorblocks 2 streifenden und diesen auch außerhalb der Schutzhülle 12 noch kühlenden Luftstrom zu erzeugen. Auslassöffnungen können auch schlicht und einfach durch aus Fertigungstoleranzen resultierende Spalte zwischen den Rändern der Schutzhülle 12 und dem Motorblock 2 oder dem Gehäuse der Turbine 14 oder zwischen miteinander verbundenen Elementen der Schutzhülle 12 gebildet sein.

Im einen wie im anderen Fall ist der Querschnitt der Auslassöffnungen 24 bzw. 27 klein im Vergleich zum Querschnitt des Zwischenraums 23, um in Höhe der Auslassöffnungen 24, 27 eine hohe Strömungsgeschwindigkeit der ausströmenden Luft zu erzwingen, die ein Eindringen von Partikeln in den Zwischenraum 23 über die Auslassöffnungen 24, 27 zuverlässig verhindert.

Ein Abgasleitungsabschnitt 28, der sich von der Turbine 14 zu einem Schalldämpfer 29 erstreckt, sowie der Schalldämpfer 29 selbst sind nicht von der Schutzhülle 12 umgeben, da infolge der in der Turbine 14 stattfindenden adiabatischen Abkühlung des Abgases stromabwärts von der Turbine 14 keine Entzündungsgefahr mehr besteht.

### Bezugszeichen

- 1: Mähdrescher
- 2: Dieselmotor
- 3: Erntevorsatz Schneidwerk
- 4: Dreschorgane
- 5: Axialmotor
- 6: Überkehrelevator
- 7: Korntankelevator
- 8: Grobreiniger
- 9: Erntegut
- 10: Verbrennungsluftfilter
- 11: Ansaugkrümmer
- 12: Schutzhülle
- 13: Turbolader
- 14: Turbine
- 15: Sieb
- 16: Sieb
- 17: Gebläse
- 18: Filter
- 19: Zylinder
- 20: Zweige
- 21: Abgaskrümmer
- 22: Zweige
- 23: Zwischenraum
- 24: Auslassöffnung
- 25: Längskante
- 26: Randsteg
- 27: Spalt
- 28: Leitungsabschnitt
- 29: Schalldämpfer

## Patentansprüche

1. Landwirtschaftliche Maschine mit einem Verbrennungsmotor (2), einer von dem Verbrennungsmotor (2) ausgehenden Abgasleitung (21, 28) und einer Schutzhülle (12), die wenigstens einen Teil (14, 21) der Abgasleitung (21, 28) unter Ausbildung eines Zwischenraums (23) überdeckt, **dadurch gekennzeichnet, dass** der Zwischenraum (23) mit Überdruck beaufschlagt ist, wobei die Landmaschine als Quelle für den Überdruck ein Gebläse (17) aufweist.

2. Landwirtschaftliche Maschine nach Anspruch 1, **dadurch gekennzeichnet, dass** der überdeckte Teil (14, 21) der Abgasleitung einen Abgassammelkrümmer (21) und/oder wenigstens eine Turbine (14) eines Turboladers (13) umfasst.

3. Landwirtschaftliche Maschine nach Anspruch 1 oder 2, **dadurch gekennzeichnet, dass** einer Quelle für den Überdruck ein Staubfilter (8, 10; 18) zugeordnet ist.

4. Landwirtschaftliche Maschine nach Anspruch 3 und Anspruch 1, **dadurch gekennzeichnet, dass** der Staubfilter (8, 10; 18) saugseitig vom Gebläse (17) angeordnet ist.

5. Landwirtschaftliche Maschine nach einem der vorhergehenden Ansprüche, **dadurch gekennzeichnet, dass** eine Auslassöffnung (24; 27) des Zwischenraums (23) als Engpass ausgebildet ist.

6. Landwirtschaftliche Maschine nach einem der vorhergehenden Ansprüche, **dadurch gekennzeichnet, dass** eine Auslassöffnung (24) des Zwischenraums (23) in der Schutzhülle (12) gebildet ist.

7. Landwirtschaftliche Maschine nach einem der vorhergehenden Ansprüche, **dadurch gekennzeichnet, dass** eine Auslassöffnung (24; 27) des Zwischenraums (23) durch einen Spalt (27) zwischen einem Rand der Schutzhülle (12) und einem zu diesem Rand benachbarten Teil (2) der Maschine gebildet ist.

8. Landwirtschaftliche Maschine nach einem der vorhergehenden Ansprüche, **dadurch gekennzeichnet, dass** Luft in dem Zwischenraum (23) entgegengesetzt zur Flussrichtung des Abgases in der Abgasleitung (21) strömt.

9. Landwirtschaftliche Maschine nach einem der vorhergehenden Ansprüche, **dadurch gekennzeichnet, dass** der Luftdurchsatz im Zwischenraum (23) bemessen ist, um die Temperatur der den Zwischenraum (23) begrenzenden Oberflächen unter der Zündtemperatur von Staub- und Schmutzpartikeln zu halten.

10. Landwirtschaftliche Maschine nach Anspruch 9, **dadurch gekennzeichnet, dass** das Verhältnis zwischen dem Durchsatz der Luft und der Nennleistung des Verbrennungsmotors (2) zwischen 1 und 20 l min⁻¹ kW⁻¹ beträgt.

11. Landwirtschaftliche Maschine nach einem der vorhergehenden Ansprüche, **dadurch gekennzeichnet, dass** in der Abgasleitung (21, 28) eine Turbine (14) eines Turboladers (13) angeordnet ist.

12. Landwirtschaftliche Maschine nach Anspruch 11, **dadurch gekennzeichnet, dass** der von der Schutzhülle (12) überdeckte Teil (21) der Abgasleitung (21, 28) sich von einem Abgasauslassventil des Verbrennungsmotors (2) wenigstens bis zur Turbine (14) erstreckt.

## Claims

1. An agricultural machine comprising an internal combustion engine (2), an exhaust pipe (21, 28) from the internal combustion engine (2) and a protective sleeve (12) which covers over at least a part (14, 21) of the exhaust pipe (21, 28) with the formation of an intermediate space (23), **characterised in that** the intermediate space (23) can be acted upon with an increased pressure, wherein the agricultural machine has a fan (17) as the source for the increased pressure.

2. An agricultural machine according to claim 1 **characterised in that** the covered part (14, 21) of the exhaust pipe includes an exhaust gas collecting manifold (21) and/or at least one turbine (14) of a turbocharger (13).

3. An agricultural machine according to claim 1 or claim 2 **characterised in that** a dust filter (8, 10; 18) is associated with a source for the increased pressure.

4. An agricultural machine according to claim 3 and claim 1 **characterised in that** the dust filter (8, 10; 18) is arranged on the suction side of the fan (17).

5. An agricultural machine according to one of the preceding claims **characterised in that** an outlet opening (24; 27) of the intermediate space (23) is in the form of a constriction.

6. An agricultural machine according to one of the preceding claims **characterised in that** an outlet opening (24) of the intermediate space (23) is formed in the protective sleeve (12).

7. An agricultural machine according to one of the preceding claims **characterised in that** an outlet opening (24; 27) of the intermediate space (23) is formed by a gap (27) between an edge of the protective sleeve (12) and a part (2) of the machine, that is adjacent to said edge.

8. An agricultural machine according to one of the preceding claims **characterised in that** air flows in the intermediate space (23) in opposite relationship to the flow direction of the exhaust gas in the exhaust pipe (21).

9. An agricultural machine according to one of the preceding claims **characterised in that** the air throughput in the intermediate space (23) is of such a magnitude as to keep the temperature of the surfaces defining the intermediate space (23) below the ignition temperature of dust and dirt particles.

10. An agricultural machine according to claim 9 **characterised in that** the ratio between the throughput of air and the nominal power of the internal combustion engine (2) is between 1 and 20 l min⁻¹ kW⁻¹.

11. An agricultural machine according to one of the preceding claims **characterised in that** a turbine (14) of a turbocharger (13) is arranged in the exhaust pipe (21, 28).

12. An agricultural machine according to claim 11 **characterised in that** the part (21) of the exhaust pipe (21, 28), that is covered by the protective sleeve (12), extends from an exhaust valve of the internal combustion engine (2) at least as far as the turbine (14).

## Revendications

1. Machine agricole dotée d'un moteur à combustion interne (2), d'un conduit de gaz d'échappement (21, 28), partant du moteur à combustion interne (2), et d'une enveloppe protectrice (12) qui recouvre au moins une partie (14, 21) du conduit de gaz d'échappement (21, 28), en formant un espace (23), **caractérisée en ce qu'**une surpression est appliquée à l'espace (23), la machine agricole comportant une soufflante (17) en tant que source de la surpression.

2. Machine agricole selon la revendication 1, **caractérisée en ce que** la partie recouverte (14, 21) du conduit de gaz d'échappement comprend un collecteur d'échappement (21) et/ou au moins une turbine (14) d'un turbocompresseur (13).

3. Machine agricole selon la revendication 1 ou 2, **caractérisée en ce qu'**un filtre anti-poussière (8, 10 ; 18) est associé à une source générant la surpression.

4. Machine agricole selon la revendication 3 et la revendication 1, **caractérisée en ce que** le filtre anti-poussière (8, 10 ; 18) est disposé côté aspiration de la soufflante (17).

5. Machine agricole selon l'une des revendications précédentes, **caractérisée en ce qu'**une ouverture de sortie (24 ; 27) de l'espace (23) est réalisée sous forme de rétrécissement.

6. Machine agricole selon une des revendications précédentes, **caractérisée en ce qu'**une ouverture de sortie (24) de l'espace (23) est réalisée dans l'enveloppe protectrice (12).

7. Machine agricole selon une des revendications précédentes, **caractérisée en ce qu'**une ouverture de sortie (24 ; 27) de l'espace (23) est constituée d'un interstice (27) entre un bord de l'enveloppe protectrice (12) et une partie (2) de la machine qui est adjacente à ce bord.

8. Machine agricole selon une des revendications précédentes, **caractérisée en ce que** l'air s'écoule dans l'espace (23), dans le sens opposé au sens d'écoulement des gaz d'échappement dans le conduit de gaz d'échappement (21).

9. Machine agricole selon une des revendications précédentes, **caractérisée en ce que** le débit d'air dans l'espace (23) est prévu pour maintenir la température des surfaces délimitant l'espace (23) sous la température d'inflammation des particules de poussière et d'impuretés.

10. Machine agricole selon la revendication 9, **caractérisée en ce que** le rapport entre le débit de'air et la puissance nominale du moteur à combustion interne (2) est compris entre 1 et 20 l min⁻¹ kW⁻¹.

11. Machine agricole selon une des revendications précédentes, **caractérisée en ce qu'**une turbine (14) d'un turbocompresseur (13) est disposée dans le conduit de gaz d'échappement (21, 28).

12. Machine agricole selon la revendication 11, **caractérisée en ce que** la partie (21) du conduit de gaz d'échappement (21, 28) qui est recouverte par l'enveloppe protectrice (12) s'étend à partir d'une soupape de sortie de gaz d'échappement du moteur à combustion interne (2) et au moins jusqu'à la turbine (14).
